# EUROPÄISCHE PATENTSCHRIFT

(11) **EP 0 407 654 B1**
(45) Veröffentlichungstag und Bekanntmachung des Hinweises auf die Patenterteilung: **22.02.1995**
(21) Anmeldenummer: 89119662.8
(22) Anmeldetag: 24.10.1989
(51) Int. Cl.: G01D 5/22, G01D 13/24, G01D 5/04

(54) **Verfahren zum Bestimmen der absoluten Position eines Zeigers in einer Anzeigeeinrichtung und Anzeigeeinrichtung**
Indicator device and method of determining the absolute position of a pointer in the same
Appareil d'indication et procédé pour la détermination de la position absolute d'une aiquille dans l'appareil

(30) Priorität: 19.06.1989 DE 3919926
(43) Veröffentlichungstag der Anmeldung: 16.01.1991
(73) Patentinhaber: VDO Adolf Schindling AG, D-60487 Frankfurt (DE)
(72) Erfinder: Kronenberg, Klaus, D-6231 Schwalbach/Ts. (DE)
(74) Vertreter: Klein, Thomas, Dipl.-Ing. (FH)

(56) Entgegenhaltungen:
- DE-A- 2 527 744
- DE-A- 2 946 328
- DE-A- 3 306 642
- PATENT ABSTRACTS OF JAPAN, vol. 013, no. 370 (P-920), 17 August 1989 & JP-A-1126506
- PATENT ABSTRACTS OF JAPAN, vol. 009, no. 321 (E-367), 17 December 1985 & JP-A-60152298

## Beschreibung

Die Erfindung betrifft ein Verfahren zum Bestimmen der absuluten Position eines Zeigers in einer Anzeigeeinrichtung, der von einem Rotor eines Drehfeldmotors über ein Getriebe bewegt wird, und eine Anzeigeeinrichtung mit einem Zeiger, der über ein Getriebe vom Rotor eines Drehfeldmotors bewegt wird, und mit einem Anschlag für den Zeiger, wobei der Drehfeldmotor mindestens zwei felderzeugende Spulen aufweist, die mit einer Steuereinrichtung, die am Ausgang für jede Spule ein Signal erzeugt, elektrisch verbunden sind.

Im Gegensatz zu Anzeigeinstrumenten, in denen der Zeiger direkt von einem Rotor in einer Spulenanordnung beeinflußt wird, wie beispielsweise in einer Kreuzspul-Drehmagnetanordnung, ist es in einigen Anwendungsbereichen vorteilhaft, den Zeiger über ein Getriebe von einem Drehfeldmotor anzutreiben. In Abhängigkeit vom Übersetzungsverhältsnis des Getriebes muß der Rotor dann eine größere oder kleinere Anzahl von Umdrehungen durchführen, um den Zeiger um einen bestimmten Winkelbereich zu bewegen. Dem ansteuernden System ist es bekannt, wie viele Umdrehungen des Rotors notwendig sind, um die Anzeige um einen gewünschten Wert zu ändern. Dabei ist es jedoch von Nachteil, daß es keine direkte Beziehung mehr zwischen der Winkelposition des Rotors im Motor und der Stellung des Zeigers gibt. Jeder Winkelstellung des Rotors im Motor sind nämlich eine Vielzahl von Stellungen des Zeigers zugeordnet. Die absolute Position des Zeigers läßt sich also nicht mehr aus den Motordaten alleine ermitteln. Dies ist insbesondere dann von Nachteil, wenn die Energiezufuhr des ansteuernden Systems aus irgendeinem Grunde unterbrochen wird und das ansteuernde System die Information über die aktuelle Zeigerstellung verliert. Dies kann insbesondere bei der Verwendung der eingangs genannten Anzeigeeinrichtung in Kraftfahrzeugen der Fall sein, wo beispielsweise bei Reparaturen an der elektrischen Ausrüstung die elektrische Verbindung zur Batterie aus Sicherheitsgründen vollständig unterbrochen werden muß. Die Verwendung von externen Sensoren, beispielsweise induktiver Näherungsschalter, mechanischer Endschalter, Lichtschranken oder ähnliches verteuert die Anzeigeeinrichtung. Darüber hinaus bedeuten mehr Bauteile automatisch auch ein größeres Gewicht, was insbesondere bei Verwendung in der Kraftfanrzeug- oder Flugzeugtechnik unerwünscht ist. Außerdem steht oft nicht der Platz zur Verfügung, um die externen Sensoren unterzubringen.

Beispielsweise kann aber auch zur absoluten Positionsbestimmung bei einer Anzeigeeinrichtung mit einem von einem Schrittmotor betriebenen Zeiger und mit einem Anschlag durch Betätigen einer Taste ein Zähler auf Null gestellt und der Zeiger bis zum Anschlag gefahren werden. Eine solche Einrichtung ist in der DE-A-2 946 328 offenbart. Für einen Zeiger, der über einen Drehfeldmotor betrieben wird ist eine solche Einrichtung aber ungeeignet.

Es ist die Aufgabe der Erfindung, ein Verfahren und eine Anzeigeeinrichtung anzugeben, mit denen ohne Einsatz von externen Sensoren der absolute Bezug zwischen dem ansteuernden System und der Zeigerstellung hergestellt werden kann.

Diese Aufgabe wird bei einem Verfahren der eingangs genannten Art durch die im Anspruch 1 genannten Merkmale gelöst.

Die Erfindung beruhrt auf dem folgenden Prinzip: Wenn der Rotor eines Drehfeldmotors sich nicht mehr weiterdrehen kann, weil sein Ausgang blockiert ist, beispielsweise weil der Zeiger am Ausgang des Getriebes gegen einen Anschlag anliegt, und das ansteuernde Feld sich weiterbewegt, führt der Rotor eine Drehung entgegen der eigentlichen Drehrichtung des Feldes aus, wenn die Winkeldifferenz zwischen der Hauptachse des Rotors, die in der Regel durch einen Magneten gebildet wird, und der Hauptachse des Feldes größer als 180° wird. In diesem Fall "kippt" der Rotor aus einem labilen Gleichgewicht, das bei einer Winkeldifferenz von genau 180° auftritt, in ein stabiles Gleichgewicht, das bei einer Winkeldifferenz von 0° herrscht. Die beiden Hauptachsen von Rotor und Drehfeld kommen wieder zur Deckung. Durch die Bewegung des Rotors wird in der Spulenanordnung, die das Drehfeld erzeugt, ein Signal induziert. Dieses Signal kann beispielsweise als Spannung auftreten, die der erzeugenden Spannung entgegengesetzt ist. Dieses Signal kann dann ausgewertet werden. Da die Winkelstellung des Drehfeldes ah dem Zeitpunkt, an dem das Signal auftritt, bekannt ist, läßt sich die Anschlagglage des Zeigers dadurch errechnen, daß von dieser Winkelstellung 180° subtrahiert werden.

Das Drehfeld kann dabei kontinuierlich gedreht werden. Für eine bessere Auflösung ist es jedoch von Vorteil, daß das Drehfeld schrittweise gedreht wird. Das Signal, das durch den zurückdrehenden Rotor induziert wird, erscheint dann zwangsläufig nach einem bestimmten Schritt. Da das durch den Zeiger zurückgelegte Winkelinkrement für jeden Schritt bekannt ist, läßt sich die Subtraktion der 180° ganz einfach dadurch durchführen, daß eine bestimmte Anzahl von Schritten zurückgerechnet wird.

Zur Erhöhung der Auflösegenauigkeit ist es von Vorteil, daß zwischen jedem Schritt eine Pause vorwählbarer Länge vorgesehen ist. Der Rotor braucht naturgemäß eine gewisse Zeit, um sich zurückzudrehen. Diese Zeit ist unter anderem durch die Trägheit bestimmt, die der Rotor seiner Drehung entgegensetzt. Wenn nach jedem Schritt eine Pause eingelegt wird, hat der Rotor genügend Zeit, um sich zurückzudrehen und sich mit dem Feld auszurichten. Bei ausreichender Dimensionierung der Pausen kann es also nicht vorkommen, daß das Signal, daß die Rückdrehung des Rotors anzeigt, erst auftritt, wenn sich das Drehfeld schon zu weit, also um einen Winkel von weit mehr als 180°, weitergedreht hat.

Mit Vorteil wird die Drehung des Drehfelds nach Auftreten des induzierten Signals fortgesetzt, und erst ein zweites oder späteres induziertes Signal wird zur Bestimung der absoluten Position des Zeigers verwendet. Wenn das System aus einem beliebigen Zustand gestartet wird, ist der Bezug des Magnetfeldes zur Winkellage des Rotors nicht definiert. Das Magnetfeld des Drehfeldmotors muß aber in einer bestimmten Lage eingeschaltet werden. Dieses zwangsweise Einstellen eines Winkels kann ein Ausgangssignal in der Spulenanordnung zur Folge haben, wenn beispielsweise die Winkellage des Rotors nicht mit der Winkellage des Feldes übereingestimmt hat. Um sicherzustellen, daß nicht irrtümlicherweise dieses Signal für die Ermittlung des Anschlag-Zustandes des Zeigers ausgewertet wird, ist erfindungsgemäß vorgesehen, daß erst das zweite oder ein späteres Signal verwendet wird, um festzustellen, ob der Rotor am Anschlag ist oder nicht. Auch wenn die Winkellage des Rotors zufälligerweise genau mit der eingestellten Winkellage des Drehfelds übereingestimmt hat, schadet die vorgeschlagene Verfahrenweise nicht. Der Rotor wird dann zwar gegen den Anschlag bewegt, und erzeugt nach der Drehung des Drehfeldes um etwas mehr als 180° ein erstes Signal, das theoretisch zur Bestimmung der Anschlag-Lage des Zeigers verwendet werden könnte. Der Rotor dreht sich dann weiter, wobei die Anschlag-Lage des Zeigers erst bei der zweiten Umdrehung tatsächlich bestimmt wird, weil erst der zweite Impuls "gültig" ist. Die geringe mechanische Belastung des Zeigers ist unerheblich.

Für den zuletzt genannten Effekt kann es vorkommen, daß der Zeiger am Beginn des Bestimmungsvorganges zweimal kurzzeitig bewegt wird. Diese zweimalige Bewegung könnte störend auf das Auge eines Benutzers oder Betrachters wirken. Um diesen Nachteil zu beseitigen, ist erfindungsgemäß vorgesehen, daß in einer Lernphase die Winkellage des Drehfeldes, bei der das Signal induziert wird, ermittelt und nichtflüchtig abgespeichert wird, und daß am Angang einer Bestimmungsphase diese Winkellage des Drehfelds eingestellt wird. In der Lernphase wird der Zeiger zweimal langsam gegen den Anschlag gefahren, der reale Nullpunkt, d.h. die Winkellage des Drehfeldes bei der der Zeiger am Anschlag liegt, berechnet und dieser Wert abgespeichert, beispielsweise in einem nichtflüchtigen Speicher (EEPROM). Beim Starten des Systems, beispielsweise nach einem vollständigen Stromausfall, wird das Drehfeld auf den gespeicherten Wert eingestellt. Wird nach Anlegen dieses Wertes ein Signal durch eine Drehung des Rotors erzeugt, ist sichergestellt, daß es sich um ein Fehlersignal handelt und ignoriert werden kann.

Bei einer Anzeigeeinrichtung der eingangs genannten Art wird die Aufgabe durch die im Anspruch 6 genannten Merkmale gelöst.

Die Signale am Ausgang der Steuereinrichtung (Ausgangssignale) erzeugen in jeder Spule ein Magnetfeld. Die Überlagerung der Magnetfelder einer jeden Spule ergeben das resultierende Magnetfeld. Durch Änderung der Bestromungsverhältnisse in den einzelnen Spulen läßt sich die Richtung des resultierenden Magnetfelds ändern. Beispielsweise läßt sich ein Drehfeld dadurch erzeugen, daß die Steuereinrichtung für jede Spule ein sinusförmiges Ausgangssignal erzeugt, wobei die Ausgangssignale elektrisch um einen Winkel gegeneinander phasenverschoben sind, der dem räumlichen Winkel zwischen den einzelnen Spulen der Spulenanordnung entspricht. Die Sinus-Signale können natürlich auch treppen- oder stufenförmig aufgebaut sein, wenn sich der Rotor des Drehfeldmotors schrittweise bewegt. Die Auswerteeinrichtung untersucht nun, ob der Signalverlauf am Eingang der jeweiligen Spulen (Eingangssignale) mit den Ausganssignalen der Steuereinrichtung übereinstimmt. Dies wird grundsätzlich immer der Fall sein, ausgenommen wenn der Rotor sich zurückdreht, um sich wieder mit dem Feld auszurichten. In diesem Fall stimmt nämlich das Ausgangssignal der Steuereinrichtung nicht mehr mit dem Eingangssignal der zugehörigen Spule überein. Die Auswerteschaltung kann dann ein Signal erzeugen, das diese Nicht-Übereinstimmung anzeigt.

Wenn beide Spannungen eine Sinusform mit unterschiedlicher Amplitude aufweisen, ist die Differenzspannung ebenfalls sinusförmig, wobei die Amplitude der Amplitudendifferenz entspricht. Diese Gesetzmäßigkeit wird aber dann gestört, wenn der Rotor sich zurückdreht und eine zusätzliche Spannung in der Spule induziert.

Vorteilhafterweise ist dabei eine Skalierungseinrichtung vorgesehen, die die Amplitude der beiden Eingangsspannungen eines jeden Subtrahierers gleich groß macht. Die Differenz, die der Subtrahierer erzeugt, wird dann im Normalfall Null. Nur wenn sich der Rotor zurückdreht und eine Spannung induziert, erscheint am Ausgang des Subtrahierers eine von Null verschiedene Spannung.

Bevorzugterweise weist dabei jede Skalierungseinrichtung zwei Spannungsteiler auf. Mit diesen Spannungsteilern läßt sich die Skalierungseinrichtung auf einfache Art und Weise realisieren.

Dabei kann einer der beiden Spannungsteiler die zugehörige Spule und einen ohmschen Widerstand und der andere Spannungsteiler zwei ohmsche Widerstände aufweisen. Die Spannungsteilung mit Hilfe eines ohmschen bzw. eines ohmsch-induktiven Spannungsteilers ist ein einfaches Verfahren zur Skalierung der abgegriffenen Spannungen.

In einer bevorzugten Ausführungsform sind die Ausgänge der Subtrahierer mit einer Logikschaltung verbunden, die ein Ausgangssignal erzeugt, wenn das Signal mindestens eines Subtrahiererausgangs einen vorbestimmten Wert überschreitet. Wie oben dargestellt, ist der Ausgang des Subtrahierers in der Regel gleich Null. Nur wenn ein Signal auftritt, weil sich der Rotor zurückdreht, weicht die Spannung über der Spule von der Spannung am Ausgang der Steuereinrichtung ab. In diesem Fall erzeugt der Subtrahierer ein Ausgangssignal. Wenn mehrere Spulen vorhanden sind, wie dies bei einem Drehfeldmotor der Fall sein muß, kann es allerdings vorkommen, daß in einer der Spulen kein Signal oder nur ein sehr kleines, kaum meßbares Signal erzeugt wird. Um sicherzustellen, daß die Auswerteeinrichtung zuverlässig ein Signal erfaßt, ist die Logikschaltung vorgesehen, die bereits dann reagiert, wenn nur ein einer Spule ein Signal induziert wird.

Mit Vorteil weist die Steuereinrichtung einen digital arbeitetenden Signalgenerator auf. Die Steuereinrichtung kann daher sehr leicht eine treppenförmige Ausgangsspannung erzeugen.

Die Erfindung ist im folgenden anhand eines bevorzugten Ausführungsbeipiels in Verbindung mit der Zeichnung beschrieben. Darin zeigen:

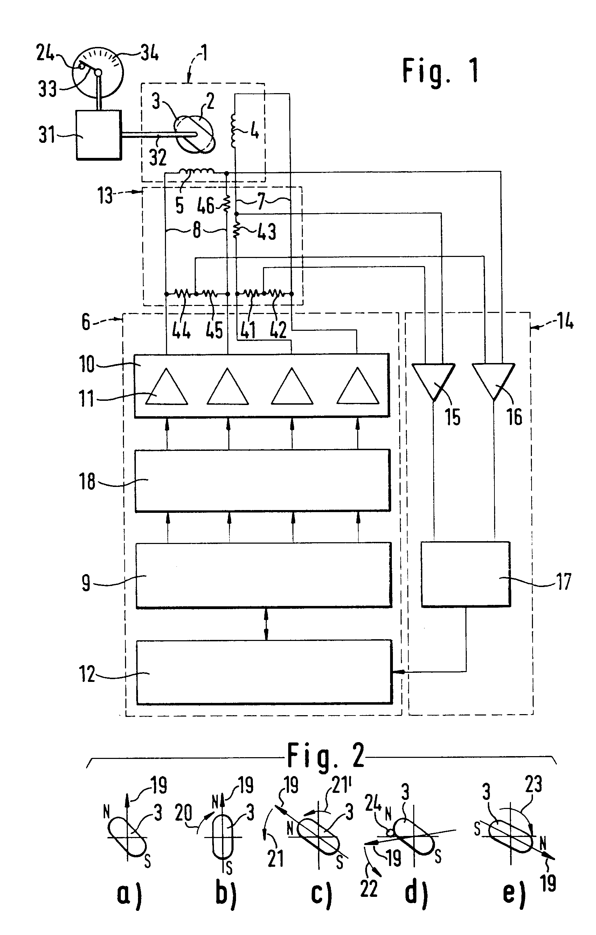

- Fig. 1: eine Schaltungsanordnung einer Anzeigeeinrichtung,
- Fig. 2: verschiedene Stellungen des Rotors in bezug auf das Magnetfeld,
- Fig. 3: zwei Spannungsverläufe zur Darstellung des induzierten Signals,
- Fig. 4: zwei Spannungsverläufe, von denen einer den Ausgang eines Subtrahierers darstellt und
- Fig. 5: einen vollständigen Spannungsverlauf zur Ansteuerung eines Zeigers.

Ein Drehfeldmotor 1 weist einen Rotor 2 auf, der einen Magneten 3 trägt. Der Magnet 3 ist überlicherweise ein Permanentmagnet, er kann jedoch auch als Elektromagnet ausgebildet sein. Der Rotor 2 des Drehfeldmotors 1 ist über eine Achse 32 mit einem Getriebe 31 verbunden. Am Ausgang des Getriebes 31 ist ein Zeiger 33 angeordnet, der über eine Skala 34 bewegbar ist. An einem Ende der Skala 34 befindet sich ein Anschlag 24, der den Nullpunkt oder eine andere ausgezeichnete Stellung des Zeigers markiert. Wird der Zeiger 33 gegen den Anschlag 24 bewegt, wird über das Getriebe 31 und die Achse 32 jede Bewegung des Rotors 2 in die gleiche Richtung blockiert. Weiterhin weist der Motor 1 zwei Spulen 4, 5 auf, deren Spulenachsen räumlich um 90° gegeneinander versetzt sind. Eine Steuereinrichtung 6 erzeugt für jede Spule 4, 5 eine Spannung, die der Spule 4 über ein Leitungspaar 7 und der Spule 5 über ein Leitungspaar 8 zugeführt werden. Dazu weist die Steuereinrichtung 6 einen Signalgenerator 9 auf, dessen Signale in einem Verstärker 10 durch Treibestufen 11 verstärkt werden. Der Signalgenerator 9 ist ein digitaler Signalgenerator, d.h. er erzeugt für jede Spule eine Abfolge von vorher festgelegten Spannungstufen. Die Spannungsdifferenz von Stufe zu Stufe kann variieren. Es kann dabei beispielsweise angestrebt werden, einen sinusförmigen Spannungsverlauf zu erreichen. Die Ausgangssignale des Signalgenerators 9 werden in einem Tiefpaßfilter 18 gefiltert. Am Ausgang der Steuereinrichtung 6 kann daher eine mehr oder weniger sinusförmige Spannung abgegriffen werden. Die Steuereinrichtung 6 weist eine Steuerlogik 12 auf, die den Signalgenerator 9 ansteuert. Die Steuerlogik 12 kann beispielsweise mit Hilfe eines Mikroprozessors realisiert sein.

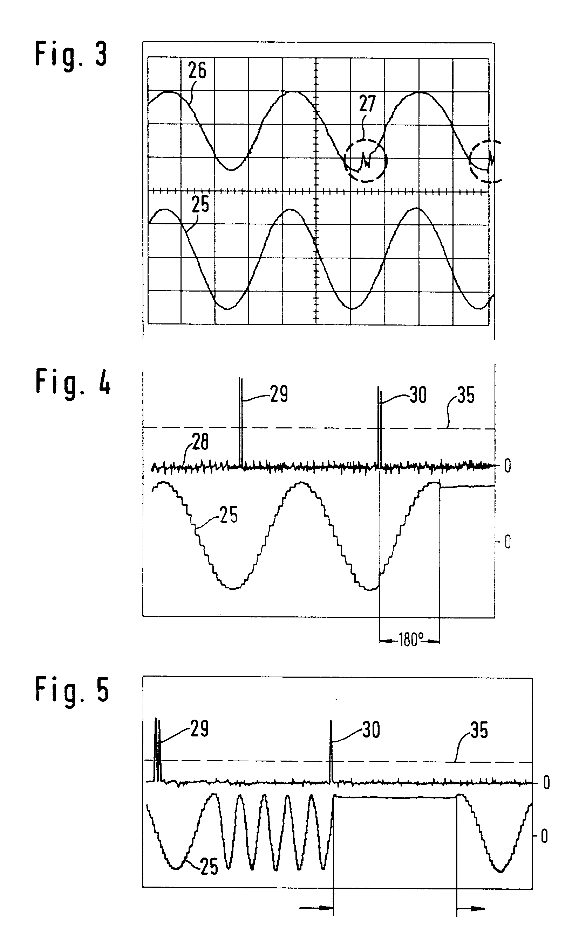

Im Drehfeldmotor 1 wird durch eine unterschiedliche Bestromung der beiden Spulen 4, 5 ein drehendes Magnetfeld erzeugt. Dieses Magnetfeld ergibt sich aus der Überlagerung des von der Spule 4 erzeugten Magnetfeldes mit dem von der Spule 5 erzeugten Magnetfeldes. Die Richtung des Magnetfeldes richtet sich im wesentlichen nach dem Verhältnis der Bestromung der beiden Spulen 4, 5. Durch eine Ansteuerung mit zwei sinusförmigen Signalen, die um 90° elektrisch gegeneinander versetzt sind, läßt sich im Drehfeldmotor 1 ein Feld erzeugen, das beispielsweise entgegen dem Uhrzeigersinn umläuft, wie dies in Fig. 2 dargestellt ist. Bei Inbetriebnahme des Drehfeldmotors 1 wird willkürlich ein Bestromungsverhältnis und damit eine Magnetfeldrichtung eingestellt. Beispielsweise erhält nur die Spule 4 einen Strom, während die Spule 5 stromlos bleibt. Das resultierende Magnetfeld ist durch den Pfeil 19 dargestellt. Die Winkellage des Magneten 3 und des Rotors 2 werden damit in der Regel nicht übereinstimmen. Der Rotor 2 wird sich daher in Richtung des Pfeiles 20 drehen, so daß die Hauptrichtung, d.h. die Nord-Süd-Achse, des Magneten 3 mit der Hauptrichtung 19 des Magnetfeldes übereinstimmt. Das Magnetfeld dreht sich dann weiter in Richtung des Pfeiles 21, wobei der Magnet 3 in Richtung des Pfeiles 21′ läuft. Aus Gründen der Einfachheit ist nicht dargestellt, daß aufgrund der Belastung durch das Getriebe 31 eine gewisse Winkeldifferenz zwischen dem Magnetfeld 19 und dem Magneten 3 auftreten kann (Fig. 2c). Nach einer durch die Ausgangslage des Zeigers 33 und das Übersetzungsverhältnis des Getriebes 31 bestimmten Anzahl von Umdrehungen des Rotors 2 läuft der Zeiger 33 gegen einen Anschlag 24, so daß eine weitere Bewegung des Rotors 2 blockiert ist, wie dies in Fig. 2d schematisch dargestellt ist. Das Magnetfeld 19 dreht sich jedoch in Richtung des Pfeiles 22 weiter. Wenn das Magnetfeld sich um einen Winkel von 180° weitergedreht hat, sind die Polaritäten von Magnetfeld 19 und Magneten 3 genau entgegengesetzt. Der Magnet 3 befindet sich in einem labilen Gleichgewichtszustand. Wird nun das Magnetfeld 19 um einen kleinen Winkel weiter in die ursprüngliche Richtung gedreht, "kippt" der Magnet 3 und dreht sich entgegen der Umlaufrichtung des Magnetfeldes 19 zurück, um sich wieder mit dem Magnetfeld 19 auszurichten (Fig. 2e). Durch diese Bewegung induziert der Magnet 3 in den beiden Spulen 4, 5 eine Spannung, die der speisenden Spannung entgegengesetzt ist. In Fig. 3 ist als speisende Spannung 25 die Ausgangsspannung der Steuereinrichtung 6 dargestellt. Über die Spule 5 wird eine Spannung 26 abgegriffen. In dem Augenblick, wo sich der Magnet 3 entgegen der normalen Felddrehrichtung zurückdreht, induziert er ein Signal 27.

Dieses Signal wird in einer Auswerteeinrichtung 14 ausgewertet. Die Auswerteeinrichtung 14 weist für jede Spule 4, 5 einen Subtrahierer 15, 16 auf, deren Ausgänge mit einer ODER-Schaltung 17 verbunden sind. Die Eingänge der beiden Subtrahierer werden jeweils mit Spannungen versorgt, die über eine Skalierungseinrichtung 13 so skaliert worden sind, daß die Maximalwerte der Amplituden der den beiden Eingängen der Substrahierer 15, 16 zugeführten Schwingungen gleich sind. Die Skalierungseinrichtung weist für jede Spule 4, 5 eine Brückenschaltung auf, deren einer Zweig einen Spannungsteiler mit zwei ohmschen Widerständen 41, 42 bzw. 44, 45 aufweist, während der andere Zweig einen ohmsch-induktiven Spannungsteiler aus der Spule 4 und dem ohmschen Widerstand 43 bzw. der Spule 5 und dem ohmschen Widerstand 46 aufweist. Da die Betriebsfrequenz, mit der das Drehfeld umläuft, bekannt ist, lassen sich die Spannungsteiler und damit die Brücke so dimensionieren, daß im Normalfall, d.h. wenn der Magnet 3 dem Feld 19 ungehindert folgt, über die Spule 4 die gleiche Spannung abfällt wie über dem ohmschen Widerstand 42 bzw. über die Spule 5 die gleiche Spannung wie über den Widerstand 45. Der Ausgang der Subtrahierer 15, 16 ist also in der Regel annähernd gleich Null. Dies ist in Fig. 4 anhand der Kurve 28 dargestellt, die das Ausgangssignal des Subtrahierers 14 darstellt. Lediglich in dem Fall, wo der Rotor 2 sich zurückdreht, nachdem das Feld 180° zurückgelegt hat, wird in den Spulen 4, 5 eine Spannung induziert, die bewirkt, daß die Spannung über den Spulen 4, 5 von den Spannungen über den Widerständen 41, 44 abweicht. Es entsteht ein Spannungsimpuls 29. Dieser Spannungsimpuls ist größer als ein vorbestimmer Grenzwert 35. Eine Logikschaltung 17 erzeugt immer dann ein Signal an ihrem Ausgang, wenn mindestens einer der Subtrahierer 15, 16 an seinem Ausgang ein Signal erzeugt, das den Schwellwert 35 überschreitet. Damit wird sichergestellt, daß jede Bewegung des Rotors 2 erkannt wird, auch wenn aufgrund ungünstiger geometrischer Verhältnisse nur in einer der beiden Spulen eine ausreichend große Spannung induziert wird. Die Logikschaltung 17, die deswegen im wesentlichen als ODER-Glied aufgebaut ist, liefert ein Ausgangssignal an die Steuerlogik 12. Wenn die Steuerlogik 12 mit Hilfe eines Mikroprozessors realisiert ist, kann das Ausgangssignal der Logikschaltung 17 beispielsweise auf einen Interrupt-Eingang des Mikroprozessors geleitet werden.

Anhand von Fig. 4 wird die Verfahrensweise der Anzeigeeinrichtung beschrieben. Der Signalgenerator 9 erzeugt für jede Spule 4, 5 ein stufenförmiges Ausgangssignal 25, das, abgesehen von den Stufen, im wesentlichen sinusförmig ist. Nach jeder Spannungsänderung erfolgt eine kleine Pause. Die Spannungen für die beiden Spulen 4, 5 sind um 90° gegeneinander phasenverschoben. Zu einem bestimmten Zeitpunkt, nämlich dann, wenn der Zeiger 33 gegen den Anschlag 24 gefahren worden ist, kann sich der Rotor 2 nicht mehr weiterdrehen. Das Feld, das durch die Spulen 4, 5 erzeugt wird, dreht sich jedoch weiter. Wenn sich das Feld um weitere 180° gedreht hat, dreht sich der Rotor 2 entgegen der Felddrehrichtung zurück. Sein Magnet 3 induziert eine Spannung. Einer der beiden Subtrahierer 15, 16 erzeugt daher ein Ausgangssignal 29. Da man aber nicht sicher ist, ob dieses Ausgangssignal 29 daher rührt, daß sich der Rotor nach Erreichen des Anschlags um 180° gedreht hat (Fig. 2e) oder ob er sich nur nach dem Feld ausgerichtet hat, was beim Einschalten der Anordnung passieren kann (Fig. 2b), wird sicherheitshalber eine weitere Umdrehung des Feldes ausgeführt. Der Zeiger läuft dann wieder gegen den Anschlag und blockiert die weitere Drehung des Rotors. Erst nachdem das Feld um weitere 180° gedreht worden ist, springt der Rotor zurück und erzeugt einen weiteren Impuls 30. 180° später ist also im Spannungsverlauf 25 genau der Zeitpunkt an dem der Zeiger 33 an den Anschlag 24 zur Anlage gekommen ist.

Um das zweimalige Bewegen des Rotors am Anschlag zu vermeiden, ist eine sogenannte Lernphase vorgesehen, um beim Auftreten eines Impulses sicher sagen zu können, ob dieser Impuls zur Bestimmung des absoluten Bezugs zwischen der Zeiger-Anschlagslage und der Stellung des Rotors im Motor verwenden werden kann. Dazu wird in der Lernphase der Rotor so bewegt, daß der Zeiger zweimal langsam gegen den Anschlag gefahren wird. Der reale Nullpunkt, d.h. der Zeitpunkt im Verlauf der Speisespannung bzw. der elektrische Winkel, bei dem der Zeiger 33 an den Anschlag 24 gefahren wird, wird berechnet und dieser Nullpunkt in einem nicht-flüchtigen Speicher, z.B. einem EEPROM, abgelegt. Da der Rotor in einer beliebigen Lage auf der Getriebewelle 32 aufgesteckt ist, d.h. kein exakter Bezug zwischen der Rotorausrichtung und der Zeigerbewegung besteht, ist der Nullpunkt für jede Anzeigeeinrichtung unterschiedlich. Wenn der Nullpunkt einmal ermittelt worden ist, kann man beim Starten jederzeit auf einen korrekten Nullpunkt zurückgreifen. Beim Starten wird genau die Bestromung eingestellt, die als zum Nullpunkt gehörig ermittelt worden ist. Wenn sich der Rotor nun bewegt, weiß man, daß dieses Signal ein Fehlersignal ist und ignoriert werden kann. Dieses Fehlersignal ist in Fig. 5 als Signal 29 dargestellt. Erst beim Auftreten des eigentlichen Signals 30 weiß man, daß der Zeiger sich in der Anschlagslage befindet. Die Steuerlogik 12 wartet nun eine vorbestimmte Zeit, bevor sie mit der erneuten Ansteuerung des Signalgenerators 9 die eigentliche Anzeige startet.

Wie insbesondere aus Fig. 4 ersichtlich, ist die Ansteuerungsspannung 25 der Steuereinrichtung 6 stufenförmig aufgebaut, wobei zwischen jeder einzelnen Stufe eine bestimmte Zeit verstreicht, in der das Bestromungsverhältnis der Spulen 4, 5 nicht geändert wird. Diese Zeit reicht aus, um dem Rotor eine Rückdrehung zu ermöglichen, wenn sich das Feld um mehr als 180° gedreht hat, seitdem der Zeiger an den Anschlag herangeführt worden ist. Die Steuereinrichtung 6 stellt das Magnetfeld im Drehfeldmotor 1 also auf einen neuen Winkel ein und wartet eine gewisse Zeit. Danach wird mit Hilfe der Subtrahierer 15, 16 überprüft, ob eine Spannungsspitze 29, 30 aufgetreten ist. Ist dies nicht der Fall, wird ein neuer Winkel eingestellt. Ist dies der Fall, befand sich der Motor am Anschlag. Die Rückführphase ist damit beendet. Der absolute Bezugspunkt ist hergestellt und eine gewünschte Position kann nun angefahren werden. Die Anzeige kann ihre normale Tätigkeit aufnehmen.

## Patentansprüche

1. Verfahren zur Bestimmung der absoluten Position eines Zeigers in einer Anzeigeeinrichtung, der von einem Rotor eines Drehfeldmotors über ein Getriebe bewegt wird, dadurch gekennzeichnet, daß nach einer Unterbrechung der Energiezufuhr die Information über die absolute Position des Zeigers wiederhergestellt wird, indem der Zeiger durch ein Drehfeld im Drehfeldmotor in eine vorbestimmte Drehfeld-Richtung gegen den Anschlag bewegt wird, wobei jede Bewegung des Rotors in die gleiche Richtung blockiert, das Drehfeld in der Drehfeld-Richtung aber weitergedreht wird und bei einer Drehung des Drehfeldes um weitere 180° der Rotor entgegen der Feldrichtung des Drehfeldes gedreht wird und ein durch diese Bewegung des Rotors im Feld erzeugenden Teil des Drehfeldmotors induziertes Signal erfaßt wird und aus der Winkelstellung des Drehfeldes bei Auftreten des induzierten Signals die Winkelstellung des Rotors ermittelt wird, bei der der Zeiger am Anschlag anliegt, indem von der Winkelstellung des Drehfeldes 180° subtrahiert werden.

2. Verfahren nach Anspruch 1, dadurch gekennzeichnet, daß das Drehfeld schrittweise gedreht wird.

3. Verfahren nach Anspruch 2, dadurch gekennzeichnet, daß zwischen jedem Schritt eine Pause vorwählbarer Länge vorgesehen ist.

4. Verfahren nach einem der Ansprüche 1 bis 3, dadurch gekennzeichnet, daß die Drehung des Drehfelds nach Auftreten des induzierten Signals fortgesetzt wird und erst ein zweites oder späteres induziertes Signal zur Bestimmung der absoluten Position des Zeigers verwendet wird.

5. Verfahren nach einem der Ansprüche 1 bis 4, dadurch gekennzeichnet, daß in einer Lernphase die Winkellage des Drehfeldes, bei der das Signal induziert wird, ermittelt und nichtflüchtig abgespeichert wird und daß am Anfang einer Bestimmungsphase diese Winkellage des Drehfeldes eingestellt wird.

6. Anzeigeeinrichtung mit einem Zeiger (33), der über ein Getriebe (31) vom Rotor (2) eines Drehfeldmotors bewegt wird, und mit einem Anschlag (24) für den Zeiger (33), wobei der Drehfeldmotor mindestens zwei felderzeugende Spulen (4,5) aufweist, die mit einer Steuereinrichtung (6), die am Ausgang für jede Spule (4,5) ein Signal erzeugt, elektrisch verbunden sind, dadurch gekennzeichnet, daß eine Auswerteeinrichtung (14) zur Wiederherstellung der Information über die absolute Position des Zeigers (33) nach Unterbrechung der Energiezufuhr der Steuereinrichtung (6) für jede Spule (4,5) einen Subtrahierer (15, 16) aufweist, der die Differenz bildet zwischen einer, die Spulen (4,5) speisenden Spannung (25) am zugeordneten Ausgang der Steuereinrichtung (6) und einer über der Spule (4,5) abgegriffenen Spannung (26), welche ein Signal (27) aufweist, das von dem bei Bewegung des Zeigers (33) gegen den Anschlag (24) in dieselbe Richtung blockierten Rotor (2) in die Spule (4, 5) induzierbar ist, wenn dieser sich, nachdem sich das, von den Spulen (4, 5) erzeugte Drehfeld um 180° gedreht hat, entgegen der Feldrichtung bewegt.

7. Anzeigeeinrichtung nach Anspruch 7, dadurch gekennzeichnet, daß eine Skalierungseinrichtung (13) vorgesehen ist, die die Amplitude der beiden Eingangsspannungen eines jeden Subtrahierers (15, 16) gleich groß macht.

8. Anzeigeeinrichtung nach Anspruch 8, dadurch gekennzeichnet, daß die Skalierungseinrichtung (13) für jeden Subtrahierer (15, 16) zwei Spannungsteiler (41, 42, 43, 4; 44, 45, 46, 5) aufweist.

9. Anzeigeeinrichtung nach Anspruch 9, dadurch gekennzeichnet, daß einer der beiden Spannungsteiler die zugehörige Spule (4, 5) und einen ohmschen Widerstand (43, 46) und der andere Spannungsteiler zwei ohmsche Widerstände (41, 42; 44, 45) aufweist.

10. Anzeigeeinrichtung nach einem der Ansprüche 8 bis 10, dadurch gekennzeichnet, daß die Ausgänge der Subtrahierer (15, 16) mit einer Logikschaltung (17) verbunden sind, die ein Ausgangssignal erzeugt, wenn das Signal mindestens eines Subtrahiererausgangs einen vorbestimmten Wert (35) überschreitet.

11. Anzeigeeinrichtung nach einem der Ansprüche 6 bis 11, dadurch gekennzeichnet, daß die Steuereinrichtung (6) einen digital arbeitetenden Signalgenerator (9) aufweist.

## Claims

1. A process for determining the absolute position of the pointer of an indicating device, which is moved by a rotor of a three-phase motor via a gearing, **characterized in that** following an interruption of energy supply the information about the absolute position of the pointer is re-established in that the pointer is moved through a three-phase field in the three-phase motor into a predetermined three-phase field direction towards a stop, whilst each movement of the rotor in the same direction is blocked, but the three-phase field is rotated farther in the three-phase field direction, and with a rotation of the three-phase field by a further 180° the rotor is rotated against the field direction of the three-phase field, and a signal which is induced by this movement of the rotor in the field generating portion of the three-phase motor is detected, and from the angular position of the three-phase field at the time the induced signal appears is determined the angular position of the rotor at which the pointer is at the stop by way of subtracting 180° from the angular position of the three-phase field.

2. A process according to claim 1, **characterized in that** the three-phase field is rotated step by step.

3. A process according to claim 2, **characterized in that** a pause of preselectable duration is provided between each step.

4. A process according to one of claims 1 to 3, **characterized in that** the rotation of the three-phase field after generation of the induced signal is continued, and only a second or subsequently induced signal is utilized for determining the absolute position of the pointer.

5. A process according to one of claims 1 to 4, **characterized in that** in a learning phase the angular position of the three-phase field at which a signal is induced is determined and stored, and that this angular position is set at the start of a determining phase.

6. An indicating device comprising a pointer (33), which is moved by the rotor (2) of a three-phase motor via a gearing (31 , and a stop (24) for the pointer (33), in which respect the three-phase field motor comprises at least two field-generating coils (4, 5) which are electrically connected to a control mechanism (6) which produces at the output for each coil (4, 5) a signal, **characterized in that** an evaluation unit (14) for re-establishing the information about the absolute position of the pointer (33) after interruption of energy supply of the control mechanism (6) has a subtracter (15, 16) for each coil (4, 5) which forms the difference between a current (25) which feeds the coils (4, 5) on the associated output of the control mechanism (6) and a current (26) picked off via the coil (4, 5), offering a signal (27) which is inducible into the coil (4,5) by the rotor (2), which is during movement of the pointer (33) towards the stop (24 blocked in the same direction, if it moves, after rotation of the 180° two-phase field generated by the coils (4, 5), in opposition of the field direction.

7. An indicating device according to claim 7, **characterized in that** a scaling device (13) is provided which equalizes the amplitude of both input currents of each subtracter (15, 16).

8. An indicating device according to claim 8, **characterized in that** the scaling device (13) comprises two current dividers (41, 42, 43, 4; 44, 45, 46, 5) for each subtracter (15, 16).

9. An indicating device according to claim 9, **characterized in that** one of the two current dividers comprises an associated coil (4, 5) and an Ohm's resistor (43, 46), and the other current divider comprises two Ohm's resistors (41, 42; 44, 45).

10. An indicating device according to one of claims 8 to 10, **characterized in that** the outputs of the subtracters (15, 16) are connected to a logic circuit (17) which produces an output signal when the signal of at least one subtracter exceeds a predetermined value (35).

11. An indicating device according to one of claims 6 to 11, **characterized in that** the control device (6) comprises a digitally operating signal generator (9).

## Revendications

1. Procédé pour la détermination de la position absolue d'une aiguille dans un dispositif indicateur, qui est déplacée, par l'intermédiaire d'un train d'engrenages, par un rotor d'un moteur à champ tournant, caractérisé en ce qu'après une interruption de l'alimentation en énergie l'information concernant la position absolue de l'aiguille est rétablie, l'aiguille étant déplacée contre la butée, par un champ tournant du moteur à champ tournant, dans un sens de champ tournant prédéterminé, tout déplacement du rotor dans la même direction étant bloqué, mais le champ tournant continuant de tourner dans le sens de rotation du champ tournant et le champ tournant ayant continué de tourner de 180°, le rotor est mis en rotation dans le sens inverse du champ tournant et un signal, induit par ce déplacement du rotor dans la partie générant le champ du moteur à champ tournant, étant capté et la position angulaire dans laquelle se trouve l'aiguille contre la butée étant déterminée à partir de la position angulaire du champ tournant lors de l'apparition du signal induit, 180° étant soustraits de la position angulaire du champ tournant.

2. Procédé selon la revendication 1, caractérisé en ce que le champ tournant est mis en rotation pas à pas.

3. Procédé selon la revendication 2, caractérisé en ce qu'il est prévu entre chaque pas une pause d'une durée pouvant être choisie à l'avance.

4. Procédé selon l'une des revendications 1 à 3, caractérisé en ce que la rotation du champ tournant se poursuit après l'apparition du signal induit, et en ce que c'est seulement un deuxième signal induit, ou un signal induit ultérieur, qui est utilisé pour la détermination de la position absolue de l'aiguille.

5. Procédé selon l'une des revendications 1 à 4, caractérisé en ce que, dans une phase d'apprentissage, la position angulaire du champ tournant dans laquelle le signal est induit, est établie et mise en mémoire de manière non volatile et en ce que cette position angulaire du champ tournant est réglée au début d'une phase de détermination.

6. Dispositif indicateur comportant une aiguille (33) qui est déplacée par l'intermédiaire d'un train d'engrenages (31) par le rotor (2) d'un moteur à champ tournant et une butée (24) destinée à l'aiguille (33), le moteur à champ tournant présentant au moins deux bobines (4, 5) qui génèrent le champ et qui sont connectées électriquement au moyen d'un dispositif de commande (6) qui génère à sa sortie un signal pour chaque bobine (4, 5), caractérisé en ce qu'un dispositif d'exploitation (14) destiné à rétablir l'information concernant la position absolue de l'aiguille (33) après une interruption de l'alimentation en énergie du disposotif (6), présente pour chaque bobine (4, 5) un dispositif soustracteur (15, 16) qui calcule la différence entre une tension (25) d'alimentation des bobines (4, 5), présente à la sortie correspondante du dispositif de commande (6), et une tension (26), captée par l'intermédiaire de la bobine (4,5) et qui présente un signal (27) qui peut être induit dans la bobine (4, 5) lors du déplacement de l'aiguille (33) contre la butée (24), par le rotor (2) bloqué dans la même direction, lorsque celui-ci, le champ tournant produit par les bobines (4,5) ayant tourné de 180°, se déplace en sens inverse du sens du champ.

7. Dispositif indicateur selon la revendication 6, caractérisé en ce qu'un dispositif (13) de mise à l'échelle est prévu, lequel dispositif module l'amplitude des deux tensions d'entrée de chacun des dispositifs soustracteurs (15, 16) de manière à les rendre égales.

8. Dispositif indicateur selon la revendication 7, caractérisé en ce que le dispositif (13) de mise à l'échelle présente deux diviseurs de tension (41, 42, 43, 4 ; 44, 45, 46, 5) destinés à chacun des dispositifs soustracteurs (15, 16).

9. Dispositif indicateur selon la revendication 8, caractérisé en ce que l'un des deux diviseurs de tension présente la bobine (4, 5) correspondante et une résistance ohmique (43, 46) et en ce que l'autre diviseur de tension présente deux résistances ohmiques (41, 42 ; 44, 45).

10. Dispositif indicateur selon l'une des revendications 7 à 9, caractérisé en ce que les sorties du dispositif soustracteur (15, 16) sont connectées à un circuit logique (17) qui produit un signal de sortie lorsque le signal d'au moins une sortie du dispositif soustracteur dépasse une valeur (35) prédéterminée.

11. Dispositif indicateur selon l'une des revendications 6 à 10, caractérisé en ce que le dispositif de commande (6) présente un générateur (9) de signal fonctionnant numériquement.
